# EUROPEAN PATENT APPLICATION

(11) **EP 3 943 290 A1**
(43) Date of publication of application: **26.01.2022**
(21) Application number: 20773722.2
(22) Date of filing: 20.02.2020
(51) Int. Cl.: B32B 27/00, H05B 3/10, H05B 3/20, B32B 7/025

(54) **SHEET-SHAPED CONDUCTIVE MEMBER AND MANUFACTURING METHOD THEREFOR**

(30) Priority: 20.03.2019 JP 2019052576
(71) Applicant: LINTEC CORPORATION, Itabashi-ku Tokyo 173-0001 (JP)
(72) Inventor: MORIOKA, Takashi, Tokyo 173-0001 (JP); ITO, Masaharu, Tokyo 173-0001 (JP)
(74) Representative: Gille Hrabal Partnerschaftsgesellschaft mbB Patentanwälte
(86) International application number: PCT/JP2020/006900
(87) International publication number: WO 2020/189173

(57) **Abstract**

A sheet-shaped conductive member (100) includes: a base material (1); a resin layer (3); and a pseudo sheet structure (2) in which a plurality of conductive linear bodies (21) are arranged at an interval, wherein each of the conductive linear bodies (21) has a wavy shape in a plan view of the sheet-shaped conductive member (100), and in a direction orthogonal to an axial direction of the conductive linear bodies (21), any adjacent ones of the conductive linear bodies (21) differ from each other in at least one of a wavelength, amplitude, phase or thickness.

## Description

### TECHNICAL FIELD

The present invention relates to a sheet-shaped conductive member and a manufacturing method therefor.

### BACKGROUND ART

A sheet-shaped conductive member (hereinafter also referred to as a "conductive sheet") having a pseudo sheet structure in which a plurality of conductive linear bodies are arranged at an interval therebetween may be applied to components/materials of various articles such as a heat-generating body of a heat-generating device, a material for a heating textile or a display protection film (anti-shatter film).

As a sheet intended to be used as a heat-generating body, Patent Literature 1 describes, for example, a conductive sheet having a pseudo sheet structure in which a plurality of linear bodies extending in one direction are arranged at intervals.

### CITATION LIST

### PATENT LITERATURE(S)

Patent Literature 1: International Publication No. WO2017/086395

### SUMMARY OF THE INVENTION

### PROBLEM(S) TO BE SOLVED BY THE INVENTION

Patent Literature 1 describes that a plurality of linear bodies have a wavy shape in a plan view of the conductive sheet. The wavy linear bodies can improve stretchability of the linear bodies in an axial direction. However, it is not indispensable that an entire sheet surface of the conductive sheet has comparable stretchability. For example, an end of the conductive sheet may need high stretchability, but a center portion of the conductive sheet may not need stretchability. Further, a pattern, hole, or the like may be provided in part(s) of the conductive sheet.

An object of the invention is to provide a sheet-shaped conductive member in which a property or design of a sheet can be optionally determined in part(s) of a sheet surface of the sheet-shaped conductive member, and a manufacturing method of the sheet-shaped conductive member.

### MEANS FOR SOLVING THE PROBLEM(S)

According to an aspect of the invention, a sheet-shaped conductive member includes: a base material; a resin layer; and a pseudo sheet structure in which a plurality of conductive linear bodies are arranged at an interval, wherein each of the conductive linear bodies has a wavy shape in a plan view of the sheet-shaped conductive member, and in a direction orthogonal to an axial direction of the conductive linear bodies, any adjacent ones of the conductive linear bodies differ from each other in at least one of a wavelength, amplitude, phase or thickness.

In the sheet-shaped conductive member according to the aspect of the invention, the resin layer preferably includes a region not covering the base material in the plan view of the sheet-shaped conductive member.

In the sheet-shaped conductive member according to the aspect of the invention, it is preferable that the resin layer and the pseudo sheet structure are formed by a plurality of belt-shaped conductive members, and each of the belt-shaped conductive members includes a belt-shaped resin tape and at least one of the wavy conductive linear bodies.

In the sheet-shaped conductive member according to the aspect of the invention, it is preferable that in the direction orthogonal to the axial direction of the conductive linear bodies, a wavelength of the conductive linear body arranged at an end of the sheet-shaped conductive member is smaller than a wavelength of the conductive linear body arranged at a center portion of the sheet-shaped conductive member, or an amplitude of the conductive linear body arranged at the end is larger than an amplitude of the conductive linear body arranged at the center portion.

In the sheet-shaped conductive member according to the aspect of the invention, in the direction orthogonal to the axial direction of the conductive linear bodies, a wavelength of the conductive linear body arranged at a center portion of the sheet-shaped conductive member is smaller than a wavelength of the conductive linear body arranged at an end of the sheet-shaped conductive member, or an amplitude of the conductive linear body arranged at the center potion is larger than an amplitude of the conductive linear body arranged at the end.

In the sheet-shaped conductive member according to the aspect of the invention, the sheet-shaped conductive member is preferably a sheet-shaped conductive member for a heat generating body.

A sheet-shaped conductive member manufacturing method according to an aspect of the invention is a sheet-shaped conductive member manufacturing method of manufacturing the sheet-shaped conductive member according to the above aspect of the invention, the method including: manufacturing the sheet-shaped conductive member by attaching, onto the base material, the plurality of belt-shaped conductive members each of which includes the belt-shaped resin tape and the at least one of the wavy conductive linear bodies.

According to the aspects of the invention, it is possible to provide a sheet-shaped conductive member in which a property or design of a sheet can be optionally determined in part(s) of a sheet surface of the sheet-shaped conductive member, and a manufacturing method of the sheet-shaped conductive member.

### BRIEF DESCRIPTION OF DRAWINGS

Fig. 1 schematically shows a sheet-shaped conductive member according to a first exemplary embodiment of the invention.
Fig. 2 shows a cross section taken along a II-II line in Fig. 1.
Fig. 3 schematically shows an example of a plurality of conductive linear bodies according to the first exemplary embodiment of the invention.
Fig. 4 schematically shows another example of the conductive linear body according to the first exemplary embodiment of the invention.
Fig. 5 schematically shows a belt-shaped conductive member according to the first exemplary embodiment of the invention.
Fig. 6 shows a cross section taken along a VI-VI line in Fig. 5.
Fig. 7A schematically shows the sheet-shaped conductive member before being stretched according to the first exemplary embodiment of the invention.
Fig. 7B schematically shows the sheet-shaped conductive member after being stretched according to the first exemplary embodiment of the invention.
Fig. 8A is an illustration for explaining a method of manufacturing the sheet-shaped conductive member according to the first exemplary embodiment of the invention.
Fig. 8B is another illustration for explaining the method of manufacturing the sheet-shaped conductive member according to the first exemplary embodiment of the invention.
Fig. 8C is still another illustration for explaining the method of manufacturing the sheet-shaped conductive member according to the first exemplary embodiment of the invention.
Fig. 8D is a further illustration for explaining the method of manufacturing the sheet-shaped conductive member according to the first exemplary embodiment of the invention.
Fig. 9 schematically shows a sheet-shaped conductive member according to a second exemplary embodiment of the invention.

### DESCRIPTION OF EMBODIMENT(S)

### First Exemplary Embodiment

Description will be made below on the invention with reference to the attached drawings with exemplary embodiments cited as an example. The invention is not limited to the contents of the exemplary embodiments. It should be noted that some parts are shown on an enlarged scale or a reduced scale in the drawings for the convenience of explanation.

### Sheet-Shaped Conductive Member

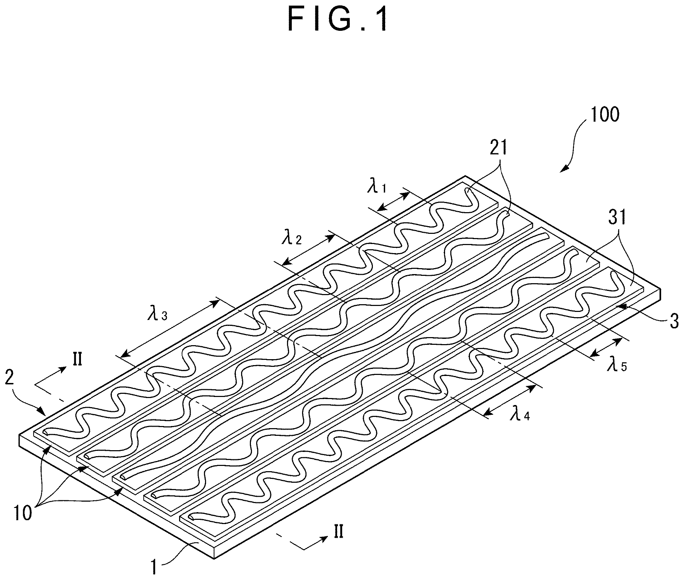

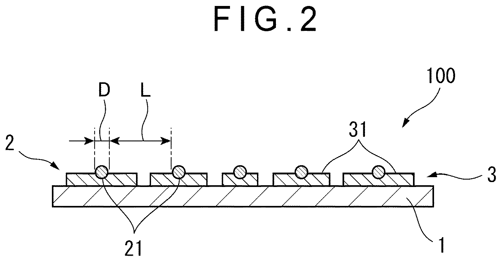

A sheet-shaped conductive member 100 according to a first exemplary embodiment includes a base material 1, a pseudo sheet structure 2, and a resin layer 3, as shown in Figs. 1 and 2. Specifically, in the sheet-shaped conductive member 100, the resin layer 3 is stacked on the base material 1, and the pseudo sheet structure 2 is stacked on the resin layer 3.

### Base Material

Examples of the base material 1 include paper, a thermoplastic resin film, a cured film of a curable resin, metallic foil, non-woven fabric, woven fabric, and glass film. Examples of the thermoplastic resin film include resin films such as a polyester resin film, polycarbonate resin film, polyimide resin film, polyolefin resin film, polyurethane resin film and acrylic resin film. Further, the base material 1 preferably has stretchability. The base material 1 is more preferably a resin film, non-woven fabric, or woven fabric that is stretchable.

It should be noted that a surface of the base material 1 not facing the resin layer 3 (a surface exposed through the sheet-shaped conductive member 100) may be subjected to, for instance, a hard coating treatment with an ultraviolet curable resin or the like to enhance protectiveness for the sheet-shaped conductive member 100 (pseudo sheet structure 2).

### Pseudo Sheet Structure

In the pseudo sheet structure 2, a plurality of conductive linear bodies 21 are arranged at intervals. Each conductive linear body 21 has a wavy shape in a plan view of the sheet-shaped conductive member 100. Specifically, the conductive linear bodies 21 may have a wavy shape of, for example, a sine wave, square wave, triangular wave, or sawtooth wave. That is, in the pseudo sheet structure 2, the conductive linear bodies 21 are arranged in a direction orthogonal to an axial direction of the conductive linear bodies 21.

The pseudo sheet structure 2 with the above arrangement can prevent the conductive linear bodies 21 from being cut when the sheet-shaped conductive member 100 is stretched in the axial direction of the conductive linear bodies 21. It should be noted that the conductive linear bodies 21 are not cut even if the sheet-shaped conductive member 100 is stretched in the direction orthogonal to the axial direction of the conductive linear bodies 21. Accordingly, the sheet-shaped conductive member 100 has sufficient stretchability.

In the pseudo sheet structure 2, in the direction orthogonal to the axial direction of the conductive linear bodies 21, any adjacent ones of the conductive linear bodies 21 differ from each other in at least one of wavelengths, amplitudes, phases and thicknesses.

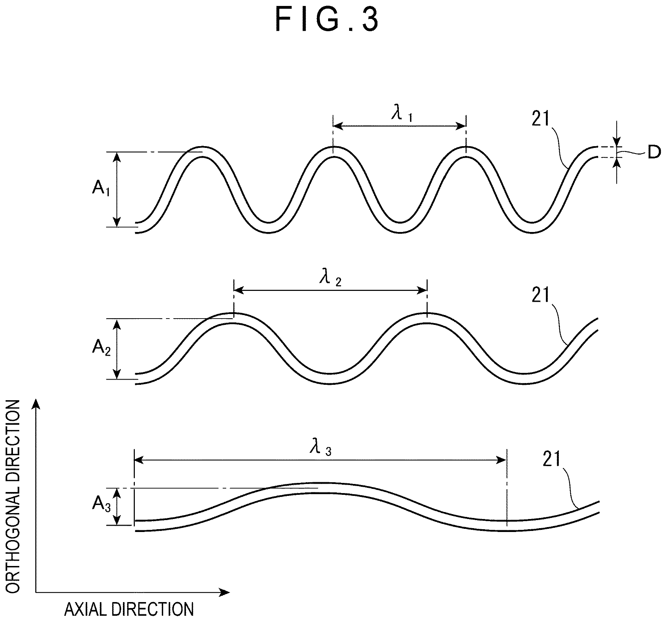

For example, as shown in Fig. 3, the wavelength and amplitude of adjacent ones of the conductive linear bodies 21 may be changed sequentially in the direction orthogonal to the axial direction of the conductive linear bodies 21. Assuming that the upper side of Fig. 3 corresponds to an end of the sheet-shaped conductive member 100 and the lower side of Fig. 3 corresponds to a center portion of the sheet-shaped conductive member 100. Fig. 3 includes an arrow indicating the axial direction of the conductive linear bodies 21 and an arrow indicating the direction (orthogonal direction) orthogonal to the axial direction of the conductive linear bodies 21. In the example of Fig. 3, wavelengths λ₃, λ₂, and λ₁ of the conductive linear bodies 21 are smaller in this order. In a case where the conductive linear bodies 21 have comparable amplitudes, the sheet-shaped conductive member 100 has higher stretchability as the conductive linear body 21 has a smaller wavelength. Thus, strechability can vary between the center portion and the end of the sheet-shaped conductive member 100, with strechability being higher from the center portion toward the end of the sheet-shaped conductive member 100. Further, in Fig. 3, amplitudes A₃, A₂, and A₁ of the conductive linear bodies 21 are larger in this order. In a case where the conductive linear bodies 21 have comparable wavelengths, the sheet-shaped conductive member 100 has higher stretchability as the conductive linear body 21 has a larger amplitude. Thus, strechability can vary between the center portion and the end of the sheet-shaped conductive member 100, with strechability being higher from the center portion toward the end of the sheet-shaped conductive member 100. Accordingly, a property of the sheet (e.g., stretchability) can be optionally designed or determined in each part of the sheet surface.

Further, the wavelengths λ₃, λ₂, and λ₁ of the conductive linear bodies 21 may be larger in this order, or the amplitudes A₃, A₂, and A₁ of the conductive linear bodies 21 may be smaller in this order. This increases stretchability in the center portion of the sheet-shaped conductive member 100, making it possible to attach the sheet-shaped conductive member 100 to a spherical surface without wrinkles.

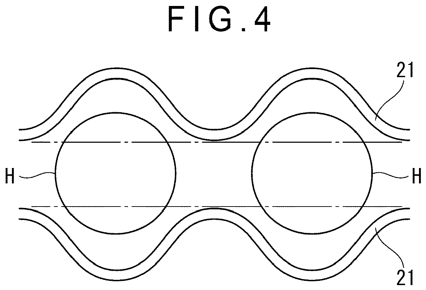

As shown in Fig. 4, phases of adjacent ones of the conductive linear bodies 21 may be shifted from each other in the direction orthogonal to the axial direction of the conductive linear bodies 21. For example, the phases of the adjacent ones of the conductive linear bodies 21 may be shifted from each other by a half wavelength.

Shifting an interval between the adjacent ones of the conductive linear bodies 21 by the half wavelength results in the interval therebetween being larger in some portions than an interval in a case where no phase is shifted (an interval shown by chain lines in Fig. 4). In a case where holes H are provided in the above portions as shown in Fig. 4, the holes H may be larger than a case where no phase is shifted. Accordingly, a design (e.g., holes) can be optionally determined in each part of the sheet surface.

Further, adjacent ones of the conductive linear bodies 21 may differ from each other in thicknesses and materials in the direction orthogonal to the axial direction of the conductive linear bodies 21.

Varying the thickness and material of the conductive linear bodies 21 results in, for example, different heat generation amounts. Accordingly, properties of the sheet (e.g., a resistance value, heat generation amount, or heat generation portion) can be optionally designed or determined in each part of the sheet surface.

Further, conductive linear bodies 21 may differ in thicknesses and materials in an arrangement direction thereof so that both ends in the arrangement direction of the conductive linear bodies 21 have the same resistance value. This allows the sheet surface to be heated uniformly in a case where the sheet-shaped conductive member 100 is used as a heat generating body.

A volume resistivity R of the conductive linear body 21 is preferably in a range from 1.0 ×10⁻⁹ Ω·m to 1.0 × 10⁻³ Ω·m, more preferably in a range from 1.0 × 10⁻⁸ Ω·m to 1.0 × 10⁻⁴ Ω·m. At the volume resistivity R of the conductive linear body 21 in the above range, a surface resistance of the pseudo sheet structure 2 is likely to decrease.

A method of measuring the volume resistivity R of the conductive linear body 21 is as follows. A silver paste is applied to both ends of the conductive linear body 21 and a resistance of a portion at a length of 40 mm from each end is measured to calculate a resistance value of the conductive linear body 21. Further, the resistance value is multiplied by a cross sectional area (unit: m²) of the conductive linear body 21 and the obtained value is divided by the measured length (0.04 m) to calculate the volume resistivity R of the conductive linear body 21.

A shape of the cross section of the conductive linear body 21 is not particularly limited and may be a polygonal shape, a flat shape, an oval shape, a circular shape, or the like. An oval shape or a circular shape is preferable in terms of, for instance, affinity to the resin layer 3.

In a case where the cross section of the conductive linear body 21 is in a circular shape, a thickness (diameter) D of the conductive linear body 21 (see Fig. 2) is preferably in a range from 5 µm to 75µm. In terms of a reduction in a rise in sheet resistance and an improvement in heat generation efficiency and anti-insulation/breakage properties in a case where the sheet-shaped conductive member 100 is used as a heat-generating body, the diameter D of the conductive linear body 21 is more preferably in a range from 8 µm to 60 µm, further preferably in a range from 12 µm to 40 µm.

In a case where the cross section of the conductive linear body 21 is in an oval shape, it is preferable that a long diameter is in a range similar to that of the above diameter D.

The diameter D of the conductive linear body 21 is an average value of results of measuring the diameter of the conductive linear body 21 at five spots selected at random by observing the conductive linear body 21 of the pseudo sheet structure 2 with a digital microscope.

An interval L between the conductive linear bodies 21 (see Fig. 2) is preferably in a range from 0.3 mm to 12.0 mm, more preferably in a range from 0.5 mm to 10.0 mm, further preferably in a range from 0.8 mm to 7.0 mm.

With the interval between the conductive linear bodies 21 being within the above range, the conductive linear bodies are dense to some extent, allowing for keeping the resistance of the pseudo sheet structure low to improve a function of the sheet-shaped conductive member 100 such as equalization of distribution of temperature rise in a case where the sheet-shaped conductive member 100 is used as a heat-generating body.

For the interval L between the conductive linear bodies 21, an interval between adjacent two of the conductive linear bodies 21 is measured by observing the conductive linear bodies 21 of the pseudo sheet structure 2 with a digital microscope.

It should be noted that the interval between adjacent two of the conductive linear bodies 21 is a length along a direction in which the conductive linear bodies 21 are arranged, that is, a length between facing portions of the two conductive linear bodies 21 (see Fig. 2). The interval L is an average value of the intervals between all adjacent ones of the conductive linear bodies 21 in a case where the arrangement of the conductive linear bodies 21 is unequally spaced.

The conductive linear bodies 21 may be linear bodies including metal wires (hereinafter also referred to as "metal wire linear bodies"), but are not particularly limited thereto. Since the metal wires have a high thermal conductivity, a high electrical conductivity, an excellent handleability, and versatility, the application of the metal wire linear bodies as the conductive linear bodies 21 facilitates to improve the light transmittance while reducing the resistance value of the pseudo sheet structure 2. The application of the sheet-shaped conductive member 100 (pseudo sheet structure 2) as the heat-generating body facilitates achieving prompt heat generation. As described above, linear bodies each having a small diameter are likely to be obtained.

Examples of the conductive linear bodies 21 include linear bodies including carbon nanotubes and linear bodies in a form of conductively coated strings, in addition to the metal wire linear bodies.

The carbon nanotube linear body is obtained by, for instance, drawing, from an end of a carbon nanotube forest (which is a grown form provided by causing a plurality of carbon nanotubes to grow on a substrate, being oriented in a vertical direction relative to the substrate, and is also referred to as "array"), the carbon nanotubes into a sheet form, and spinning a bundle of the carbon nanotubes after drawn carbon nanotube sheets are bundled. In such a producing method, a ribbon-shaped carbon nanotube linear body is obtained when the bundle of the carbon nanotubes is spun without being twisted, and a thread-shaped linear body is obtained when the bundle of the carbon nanotubes is spun while being twisted. The ribbon-shaped carbon nanotube linear body is a linear body without a structure where the carbon nanotubes are twisted. Alternatively, the carbon nanotube linear body can be obtained by, for instance, spinning from a dispersion liquid of carbon nanotubes. The production of the carbon nanotube linear body by spinning can be performed by, for instance, a method disclosed in U.S. Patent Application Publication No. 2013/0251619 (JP 2012-126635 A). In terms of achieving uniformity in diameter of the carbon nanotube linear bodies, it is desirable that string-shaped carbon nanotube linear bodies are used. In terms of obtaining carbon nanotube linear bodies with a high purity, it is preferable that the string-shaped carbon nanotube linear bodies are obtained by twisting the carbon nanotube sheets. The carbon nanotube linear bodies may each be a linear body provided by weaving two or more carbon nanotube linear bodies together. Alternatively, the carbon nanotube linear bodies may each be a linear body provided by combining a carbon nanotube and another conductive material (hereinafter, also referred to as "composite linear body").

Examples of the composite linear bodies include: (1) a composite linear body obtained by depositing an elemental metal or metal alloy on a surface of a forest, sheets or a bundle of carbon nanotubes, or a spun linear body through a method such as vapor deposition, ion plating, sputtering or wet plating in the process of manufacturing a carbon nanotube linear body obtained by drawing carbon nanotubes from an end of the carbon nanotube forest to form the sheets, bundling the drawn carbon nanotube sheets and then spinning the bundle of the carbon nanotubes; (2) a composite linear body in which a bundle of carbon nanotubes is spun with a linear body of an elemental metal or a linear body or composite linear body of a metal alloy; and (3) a composite linear body in which a carbon nanotube linear body or a composite linear body is woven with a linear body of an elemental metal or a linear body or composite linear body of a metal alloy. It should be noted that regarding the composite linear body of (2), a metal may be supported on the carbon nanotubes in spinning the bundle of the carbon nanotubes as the composite linear body of (1). Further, although the composite linear body of (3) is a composite linear body provided by weaving two linear bodies, the composite linear body of (3) may be provided by weaving three or more carbon nanotube linear bodies, linear bodies of an elemental metal, or linear bodies or composite linear bodies of a metal alloy, as long as at least one linear body of an elemental metal, or linear body or composite linear body of a metal alloy is contained.

Examples of the metal for the composite linear body include elemental metals such as gold, silver, copper, iron, aluminum, nickel, chrome, tin, and zinc and alloys containing at least one of these elemental metals (a copper-nickel-phosphorus alloy, a copper-iron-phosphorus-zinc alloy, etc.). One of these may be used alone or two or more thereof may be used in combination.

The conductive linear bodies 21 may each be a linear body in a form of a conductively coated string. Examples of the string include strings made of resins such as nylon and polyester by spinning. Examples of the conductive coating include coating films of a metal, a conductive polymer, and a carbon material. The conductive coating can be formed by plating, vapor deposition or the like. The linear body including the conductively coated string can be improved in conductivity of the linear body with flexibility of the string maintained. In other words, a reduction in resistance of the pseudo sheet structure 2 is facilitated.

The conductive linear bodies 21 may each be a linear body including a metal wire. The linear body including the metal wire may be a linear body formed of a single metal wire or a linear body made by spinning a plurality of metal wires.

Examples of the metal wire include wires containing metals, such as copper, aluminum, tungsten, iron, molybdenum, nickel, titanium, silver, and gold, or alloys containing two or more metals (e.g., steels such as stainless steel and carbon steel, brass, phosphor bronze, zirconium-copper alloy, beryllium copper, iron nickel, Nichrome, nickel titanium, KANTHAL^{®}, HASTELLOY^{®}, and rhenium tungsten). The metal wire may be plated with tin, zinc, silver, nickel, chrome, a nickel-chrome alloy, solder or the like. The surface of the metal wire may be coated with a later-described carbon material or a polymer. In particular, a wire containing one or more metals selected from among tungsten and molybdenum and alloys containing tungsten and molybdenum is preferable in terms of providing the conductive linear bodies 21 with a low volume resistivity.

The examples of the metal wire also include a metal wire coated with a carbon material. Coating the metal wire with the carbon material serves to easily make the presence of the metal wire less noticeable with a metallic luster reduced. In addition, coating the metal wire with the carbon material also serves to reduce metal corrosion.

Examples of the carbon material for coating the metal wire include amorphous carbon (e.g., carbon black, activated carbon, hard carbon, soft carbon, mesoporous carbon, and carbon fiber), graphite, fullerene, graphene, and carbon nanotube.

### Resin Layer

The resin layer 3 is a layer containing a resin. Further, the resin layer 3 is preferably a layer containing an adhesive agent. When forming the pseudo sheet structure 2 on the resin layer 3, the adhesive agent facilitates attaching the conductive linear bodies 21 to the resin layer 3.

The resin layer 3 may be formed of a dryable or curable resin. A hardness enough for protecting the pseudo sheet structure 2 is thus imparted to the resin layer 3. Accordingly, the resin layer 3 also functions as a protection film. Further, the cured or dried resin layer 3 exhibits impact resistance, so that the resin layer 3 can be inhibited from being deformed by impact.

It is preferable that the resin layer 3 is curable with an energy ray such as an ultraviolet ray, a visible energy ray, an infrared ray, or an electron ray in terms of an easy curability in a short time. It should be noted that "curing with an energy ray" includes thermosetting by energy-ray heating. It is more preferable that both the resin layer 3 is energy-ray-curable.

Examples of the adhesive agent in the resin layer 3 include: a thermosetting adhesive agent that is curable by heat; a so-called heat-seal adhesive agent that is bondable by heat; and an adhesive agent that exhibits stickiness in a case where wetted. However, in terms of easy application, the resin layer 3 is preferably energy-ray-curable. An energy-ray-curable resin is exemplified by a compound having at least one polymerizable double bond in a molecule, preferably an acrylate compound having a (meth)acryloyl group.

Examples of the acrylate compound include: chain aliphatic skeleton-containing (meth)acrylates (e.g., trimethylol propane tri(meth)acrylate, tetramethylol methanetetra(meth)acrylate, pentaerythritol tri(meth)acrylate, pentaerythritol tetra(meth)acrylate, dipentaerythritol monohydroxy penta(meth)acrylate, dipentaerythritol hexa(meth)acrylate, 1,4-butylene glycol di(meth)acrylate, and 1,6-hexanediol di(meth)acrylate); cyclic aliphatic skeleton-containing (meth)acrylates (e.g., dicyclopentanyl di(meth)acrylate and dicyclopentadiene di(meth)acrylate); polyalkylene glycol(meth)acrylates (e.g., polyethyleneglycol di(meth)acrylate); oligoester (meth)acrylate; urethane (meth)acrylate oligomer; epoxy-modified (meth)acrylate; polyether (meth)acrylates other than the above polyalkylene glycol (meth)acrylates; and itaconic acid oligomer.

A weight average molecular weight (Mw) of the energy-ray-curable resin is preferably in a range from 100 to 30,000, more preferably from 300 to 10,000.

Only one kind or two or more kinds of the energy-ray-curable resins may be contained in the adhesive agent composition. In a case where two or more kinds of the energy-ray-curable resins are contained, a combination and a ratio of the energy-ray-curable resins are selected as needed. Further, the energy-ray-curable resin(s) may be combined with a thermoplastic resin described later. A combination and a ratio of the energy-ray-curable resin(s) and thermoplastic resin are selected as needed.

The resin layer 3 may be a sticky agent layer formed of a sticky agent (a pressure-sensitive adhesive agent). The sticky agent in the sticky agent layer is not particularly limited. Examples of the sticky agent include an acrylic sticky agent, a urethane sticky agent, a rubber sticky agent, a polyester sticky agent, a silicone sticky agent, and a polyvinyl ether sticky agent. Among the above, the sticky agent is preferably at least one selected from the group consisting of an acrylic sticky agent, a urethane sticky agent, and a rubber sticky agent, more preferably an acrylic sticky agent.

Examples of an acrylic sticky agent include a polymer including a constituent unit derived from alkyl (meth)acrylate having a linear alkyl group or a branched alkyl group (i.e., a polymer with at least alkyl (meth)acrylate polymerized) and an acrylic polymer including a constituent unit derived from a (meth)acrylate with a ring structure (i.e., a polymer with at least a (meth)acrylate with a ring structure polymerized). Herein, the "(meth)acrylate" is used as a term referring to both "acrylate" and "methacrylate" and the same applies to other similar terms.

In a case where the acrylic polymer is a copolymer, a manner of copolymerization is not particularly limited. The acrylic copolymer may be any one of a block copolymer, a random copolymer, and a graft copolymer.

Among the above, an acrylic copolymer including a constituent unit (a1) derived from alkyl (meth)acrylate (a1') having a chain alkyl group having 1 to 20 carbon atoms (hereinafter, also referred to as "monomer component (a1')") and a constituent unit (a2) derived from a functional-group-containing monomer (a2') (hereinafter, also referred to as "monomer component (a2')") is preferable as the acrylic sticky agent.

It should be noted that the acrylic copolymer may further include a constituent unit (a3) derived from a monomer component (a3') other than the monomer component (a1') and the monomer component (a2').

In terms of an improvement in adhesion properties, the number of the carbon atoms of the chain alkyl group of the monomer component (a1') is preferably in a range from 1 to 12, more preferably in a range from 4 to 8, further preferably in a range from 4 to 6. Examples of the monomer component (a1') include methyl (meth)acrylate, ethyl (meth)acrylate, propyl (meth)acrylate, n-butyl (meth)acrylate, 2-ethylhexyl (meth)acrylate, lauryl (meth)acrylate, tridecyl (meth)acrylate, and stearyl (meth)acrylate. Among these monomer components (a1'), butyl (meth)acrylate and 2-ethylhexyl (meth)acrylate are preferable and butyl (meth)acrylate is more preferable.

The content of the constituent unit (a1) relative to all the constituent units of the acrylic copolymer (100 mass%) is preferably in a range from 50 mass% to 99.5 mass%, more preferably in a range from 55 mass% to 99 mass%, further preferably in a range from 60 mass% to 97 mass%, particularly preferably in a range from 65 mass% to 95 mass%.

Examples of the monomer component (a2') include a hydroxy-group-containing monomer, a carboxy-group-containing monomer, an epoxy-group-containing monomer, an amino-group-containing monomer, a cyano-group-containing monomer, a keto-group-containing monomer, and an alkoxysilyl-group-containing monomer. Among these monomer components (a2'), a hydroxy-group-containing monomer and a carboxy-group-containing monomer are preferable.

Examples of a hydroxy-group-containing monomer include 2-hydroxyethyl (meth)acrylate, 2-hydroxypropyl (meth)acrylate, 2-hydroxybutyl (meth)acrylate, 3-hydroxybutyl (meth)acrylate, and 4-hydroxybutyl (meth)acrylate, among which 2-hydroxyethyl (meth)acrylate is preferable.

Examples of a carboxy-group-containing monomer include a (meth)acrylic acid, a maleic acid, a fumaric acid, and an itaconic acid, among which a (meth)acrylic acid is preferable.

Examples of an epoxy-group-containing monomer include glycidyl (meth)acrylate.

Examples of an amino-group-containing monomer include diaminoethyl (meth)acrylate.

Examples of a cyano-group-containing monomer include acrylonitrile.

The content of the constituent unit (a2) relative to all the constituent units of the acrylic copolymer (100 mass%) is preferably in a range from 0.1 mass% to 50 mass%, more preferably in a range from 0.5 mass% to 40 mass%, further preferably in a range from 1.0 mass% to 30 mass%, particularly preferably in a range from 1.5 mass% to 20 mass%.

Examples of the monomer component (a3') include a (meth)acrylate having a ring structure (e.g., cyclohexyl (meth)acrylate, benzil (meth)acrylate, isobornyl (meth)acrylate, dicyclopentanyl (meth)acrylate, dicyclopentenyl (meth)acrylate, dicyclopentenyloxyethyl (meth)acrylate, imide (meth)acrylate, and acryloylmorpholine), vinyl acetate, and styrene.

The content of the constituent unit (a3) relative to all the constituent units of the acrylic copolymer (100 mass%) is preferably in a range from 0 mass% to 40 mass%, more preferably in a range from 0 mass% to 30 mass%, further preferably in a range from 0 mass% to 25 mass%, particularly preferably in a range from 0 mass% to 20 mass%.

It should be noted that the above monomer components (a1') may be used alone or two or more thereof may be used in combination, the above monomer components (a2') may be used alone or two or more thereof may be used in combination, and the above monomer components (a3') may be used alone or two or more thereof may be used in combination.

The acrylic copolymer may be cross-linked by a cross-linker. Examples of the cross-linker include a known epoxy cross-linker, isocyanate cross-linker, aziridine cross-linker, and metal chelate cross-linker. In cross-linking the acrylic copolymer, a functional group derived from the monomer component (a2') can be used as a crosslink point to react with the cross-linker.

The resin layer 3 may further contain an energy-ray curable component in addition to the above sticky agent.

Examples of the energy-ray curable component include, in a case where the energy ray is, for instance, an ultraviolet ray, a compound having two or more UV-polymerizable functional groups in one molecule, such as a multifunctional (meth)acrylate compound.

Further, in a case where the acrylic sticky agent is used as the sticky agent, a compound having a functional group reactive with the functional group derived from the monomer component (a2') of the acrylic copolymer and an energy-ray polymerizable functional group in one molecule as the energy-ray curable component. Reaction between the functional group of the compound and the functional group derived from the monomer component (a2') of the acrylic copolymer enables a side chain of the acrylic copolymer to be polymerizable by energy ray irradiation. Even in a case where the sticky agent is not the acrylic sticky agent, a component with an energy-ray polymerizable side chain may likewise be used as a copolymer component other than the copolymer that serves as the sticky agent.

When the resin layer 3 is energy-ray curable, the sticky agent layer preferably contains a photopolymerization initiator. The photopolymerization initiator enables increasing a speed at which the sticky agent layer is cured by energy ray irradiation.

The thermosetting resin used as the resin layer 3 is not particularly limited. Specific examples of the thermosetting resin include an epoxy resin, phenol resin, melamine resin, urea resin, polyester resin, urethane resin, acrylic resin, benzoxazine resin, phenoxy resin, amine compound and acid anhydride compound. One of the thermosetting resins may be used alone, or two or more thereof may be used in combination. Among the above examples, in terms of suitability for curing with an imidazole curing catalyst, it is preferable to use an epoxy resin, phenol resin, melamine resin, urea resin, amine compound and acid anhydride compound. Particularly, in terms of exhibiting an excellent curability, it is preferable to use a mixture of an epoxy resin, phenol resin, a mixture thereof, or a mixture of an epoxy resin and at least one selected from the group consisting of a phenol resin, melamine resin, urea resin, amine compound and acid anhydride compound.

A moisture-curable resin used as the resin layer 3 is not particularly limited. Examples of the moisture-curable resin include a urethane resin from which an isocyanate group is generated by moisture, and a modified silicone resin.

When the energy-ray-curable resin or the thermosetting resin is used, a photopolymerization initiator or a thermal polymerization initiator is preferably used. By using the photopolymerization initiator or the thermal polymerization initiator, a cross-linking structure is formed, thereby enabling to more firmly protect the pseudo sheet structure 2.

Examples of the photopolymerization initiator include benzophenone, acetophenone, benzoin, benzoinmethylether, benzoinethylether, benzoinisopropylether, benzoinisobutylether, benzoin benzoic acid, benzoin methyl benzoate, benzoin dimethylketal, 2,4-diethyl thioxanthone, 1-hydroxy cyclohexylphenylketone, benzyl diphenyl sulfide, tetramethylthiuram monosulfide, azobisisobutyronitrile, 2-chloroanthraquinone, diphenyl(2,4,6-trimethylbenzoyl)phosphine oxide, and bis(2,4,6-trimethylbenzoyl)-phenylphosphine oxide.

Examples of the thermal polymerization initiator include hydrogen peroxide, peroxydisulfuric acid salts (e.g., ammonium peroxodisulfate, sodium peroxodisulfate, and potassium peroxodisulfate), azo compounds (e.g., 2,2'-azobis(2-amidinopropane)dihydrochloride, 4,4'-azobis(4-cyanovaleric acid), 2,2'-azobisiosbutyronitrile, and 2,2'-azobis(4-methoxy-2,4-dimethylvaleronitrile)), and organic peroxides (e.g., benzoyl peroxide, lauroyl peroxide, peracetic acid, persuccinic acid, di-t-butyl peroxide, t-butyl hydroperoxide, and cumene hydroperoxide).

One of the polymerization initiators may be used alone, or two or more thereof may be used in combination.

When the polymerization initiator is used for forming a cross-linking structure, the content of the polymerization initiator is preferably in a range from 0.1 parts by mass to 100 parts by mass, more preferably in a range from 1 parts by mass to 100 parts by mass, particularly preferably in a range from 1 parts by mass to 10 parts by mass, with respect to 100 parts by mass of the energy-ray-curable resin or the thermosetting resin.

The resin layer 3 is not curable, but may be, for instance, a layer formed of a thermoplastic resin composition. A thermoplastic resin layer can be softened by containing a solvent in the thermoplastic resin composition. With this configuration, when forming the pseudo sheet structure 2 on the resin layer 3, attachment of the conductive linear bodies 21 to the resin layer 3 is facilitated. Meanwhile, by volatilizing the solvent in the thermoplastic resin composition, the thermoplastic resin layer can be dried to be solidified.

Examples of the thermoplastic resin include polyethylene, polypropylene, polyvinyl chloride, polystyrene, polyvinyl acetate, polyurethane, polyether, polyethersulfone, polyimide and acrylic resin.

Examples of the solvent include an alcohol solvent, ketone solvent, ester solvent, ether solvent, hydrocarbon solvent, alkyl halide solvent and water.

The resin layer 3 may contain an inorganic filler. With the inorganic filler contained, a hardness of the resin layer 3 can be further improved. In addition, a heat conductivity of the resin layer 3 is improved.

Examples of the inorganic filler include inorganic powder (e.g., powders of silica, alumina, talc, calcium carbonate, titanium white, colcothar, silicon carbide, and boron nitride), beads of spheroidized inorganic powder, single crystal fiber, and glass fiber. Among the above, a silica filler and an alumina filler are preferable as the inorganic filler. One of the inorganic fillers may be used alone or two or more thereof may be used in combination.

Other components may be contained in the resin layer 3. Examples of other components include known additives such as an organic solvent, a flame retardant, a tackifier, an ultraviolet absorber, an antioxidant, a preservative, an antifungal agent, a plasticizer, a defoamer, and a wettability modifier.

A thickness of the resin layer 3 is determined as needed depending on an intended use of the sheet-shaped conductive member 100. For example, in terms of adhesiveness, the thickness of the resin layer 3 is preferably in a range from 3 µm to 150 µm, more preferably in a range from 5 µm to 100 µm.

### Belt-Shaped Conductive Member

In the sheet-shaped conductive member 100 according to the exemplary embodiment, the resin layer 3 and the pseudo sheet structure 2 are preferably formed by a plurality of belt-shaped conductive members 10, as shown in Figs. 1 and 2.

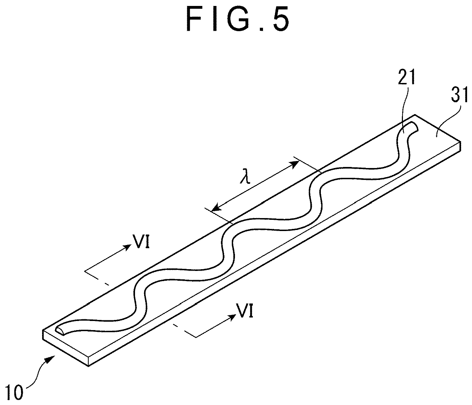

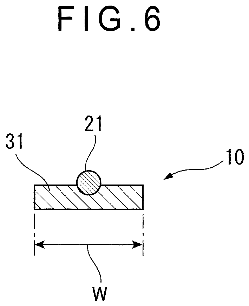

As shown in Figs. 5 and 6, the belt-shaped conductive member 10 includes a belt-shaped resin tape 31 and at least one wavy conductive linear body 21. Here, one belt-shaped conductive member 10 may include a plurality of conductive linear bodies 21.

The belt-shaped conductive members 10 used in the sheet-shaped conductive member 100 preferably differ in at least one of wavelengths, amplitudes, and thicknesses of the conductive linear bodies 21. Further, a width W (see Fig. 6) of the belt-shaped resin tape 31 in the belt-shaped conductive member 10 may depend on the belt-shaped conductive members 10 used in the sheet-shaped conductive member 100.

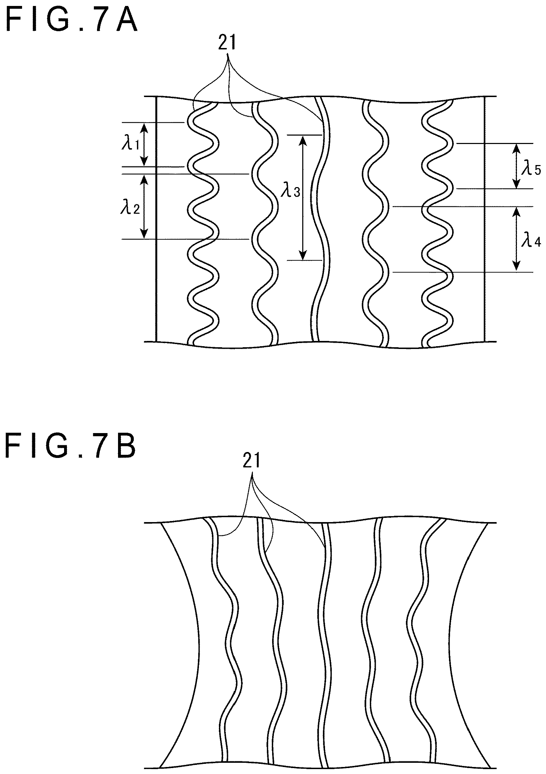

In the sheet-shaped conductive member 100, the belt-shaped conductive members 10 provided with the conductive linear bodies 21 with different wavelengths are stacked on the base material 1. Regarding the wavelengths of the conductive linear bodies 21, the center portion of the sheet-shaped conductive member 100 has the largest wavelength λ₃ of the conductive linear bodies 21. The end of the sheet-shaped conductive member 100 has the smallest wavelengths λ₁ and λ₅ of the conductive linear bodies 21. The center portion and the end of the sheet-shaped conductive member 100 thus have different levels of stretchability, with stretchability being higher from the center portion toward the end of the sheet-shaped conductive member 100. For example, when the sheet-shaped conductive member 100 shown in Fig. 7A is stretched, the ends of the sheet-shaped conductive member 100 are constricted, as shown in Fig. 7B. The conductive linear bodies 21 arranged at the ends of the sheet-shaped conductive member 100 are greatly stretched, with their wavy shapes significantly changed. In this situation, the change in the wavelengths λ₁ and λ₅ of the conductive linear bodies 21 arranged at the ends of the sheet-shaped conductive member 100 is large, but the change in the wavelength λ₃ of the conductive linear bodies arranged at the center portion of the sheet-shaped conductive member 100 is small.

Alternatively, the order of the wavelength size described above may be reversed to make the wavelength λ₃ smallest. This makes the wavelengths λ₁ and λ₅ largest. With this arrangement, the stretchability of the sheet-shaped conductive member 100 increases from the end toward the center portion thereof.

Further, the wavelength may be sequentially increased from a first end toward a second end in the sheet-shaped conductive member 100. For example, the wavelength λ₁ may be the largest and the wavelength λ₅ may be the smallest. This allows only one of the first and second ends of the sheet-shaped conductive member 100 to have high stretchability.

By adjusting the wavelengths of the conductive linear bodies 21 as described above, the sheet-shaped conductive member can be accurately provided without wrinkle even on a complex curve surface.

The belt-shaped conductive members 10 are provided at intervals. Thus, the resin layer 3 has a region not covering the base material 1 in a plan view of the sheet-shaped conductive member 100. Presence of such a region can ensure air permeability of the sheet-shaped conductive member 100 by using, for example, the base material 1 with air permeability, even if the resin layer 3 has low air permeability.

### Method for Manufacturing Belt-shaped Conductive Member

A manufacturing method of the belt-shaped conductive member 10 is not particularly limited. The belt-shaped conductive member 10 is manufactured, for instance, through the following steps.

First, a release sheet is coated with a composition for forming the resin layer 3 to form a coating film. Subsequently, the coating film is dried to produce the resin layer 3. Next, a drum member is rotated while the resin layer 3 attached with the release sheet is disposed on an outer circumferential surface of the drum member, and the conductive linear bodies 21 are spirally wound on the resin layer 3 during the rotation of the drum member. After that, a bundle of the conductive linear bodies 21 spirally wound is cut along an axial direction of the drum member, resulting in the conductive linear bodies 21 arranged on the resin layer 3. Next, cutting is performed along a direction orthogonal to the axial direction of the drum member without cutting the conductive linear bodies 21, obtaining the belt-shaped conductive member 10 attached with the release sheet provided with the belt-shaped resin tape 31 and the conductive linear body 21. Then, the belt-shaped conductive member 10 attached with the release sheet is taken off the drum member. After this process, the release sheet is removed from the belt-shaped conductive member 10 attached with the release sheet, thus obtaining the belt-shaped conductive member 10. According to this method, for instance, while rotating the drum member, a feeder of the conductive linear bodies 21 is moved along a direction parallel to an axis of the drum member, thereby facilitating the manufacture of the belt-shaped conductive members 10 that include the conductive linear bodies 21 with the same wavelength, amplitude, and thickness. Further, the belt-shaped conductive members 10 that include the conductive linear bodies 21 with different wavelengths, amplitudes, or thicknesses can be produced by changing conditions for the drum member or the feeder to other conditions.

### Method for Manufacturing Sheet-shaped Conductive Member

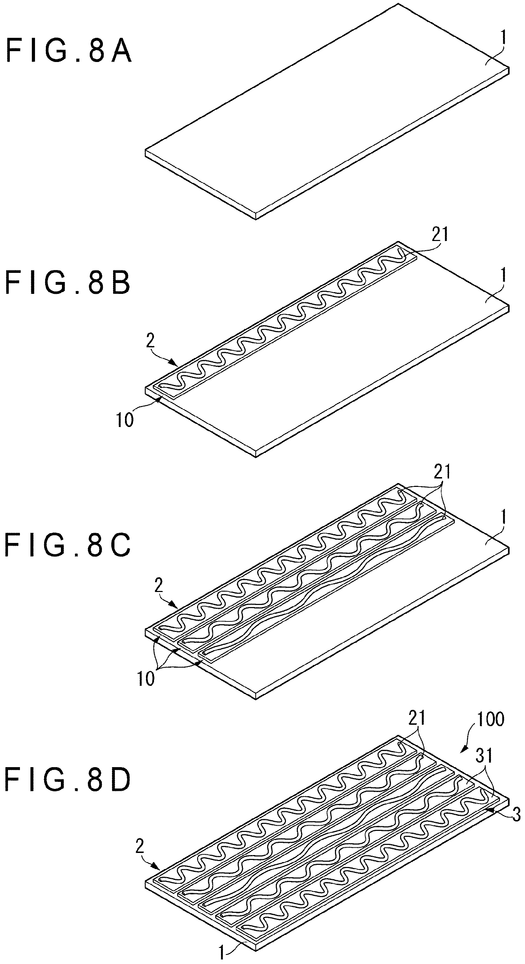

As shown in Figs. 8A to 8D, a method for manufacturing the sheet-shaped conductive member according to the exemplary embodiment is a method for manufacturing the sheet-shaped conductive member 100 by attaching, to the base material 1, the belt-shaped conductive members 10 each of which includes the belt-shaped resin tape 31 and at least one wavy conductive linear body 21.

Specifically, the base material 1 shown in Fig. 8A is prepared. Next, the belt-shaped conductive member 10 is attached to the base material 1, as shown in Fig. 8B. Next, as shown in Figs. 8C and 8D, the belt-shaped conductive members 10 that include the conductive linear bodies 21 with different wavelengths and amplitudes are sequentially attached to the base material 1.

Accordingly, the sheet-shaped conductive member 100 according to the exemplary embodiment can be manufactured efficiently.

That is, it is not necessarily easy for conventional methods to sequentially change the wavelength and amplitude of adjacent ones of the conductive linear bodies 21 in the direction orthogonal to the axial direction of the conductive linear bodies 21. This is because, in a case of forming the conductive linear bodies 21 on the resin layer 3, the conductive linear bodies 21 are typically wounded spirally around on the resin layer 3, and then cutting is performed along the direction orthogonal to the axial direction of the drum member. Varying the wavelength and amplitude in the conductive linear bodies 21 when the conductive linear bodies 21 are being spirally wound on the resin layer 3 is not easy.

In contrast, the manufacturing method of the sheet-shaped conductive member according to the exemplary embodiment can prepare, in advance, multiple kinds of belt-shaped conductive members 10 that include the conductive linear bodies 21 with different wavelengths and amplitudes. The sheet-shaped conductive member 100 according to the exemplary embodiment can thus be efficiently manufactured by sequentially attaching, to the base material 1, the belt-shaped conductive members 10 that include the conductive linear bodies 21 with different wavelengths and amplitudes.

### Effects of First Exemplary Embodiment

The exemplary embodiment can achieve the following effects.
(1) According to the exemplary embodiment, the center portion and the end of the sheet-shaped conductive member 100 may have different levels of stretchability. The stretchability is higher from the center portion toward the end of the sheet-shaped conductive member 100. Accordingly, a property of the sheet (e.g., stretchability) can be designed or determined as needed in each part of the sheet surface.
(2) According to the exemplary embodiment, in the direction orthogonal to the axial direction of the conductive linear bodies 21, the phases of adjacent ones of the conductive linear bodies 21 may be shifted from each other by the half wavelength. This results in an interval between adjacent ones of the conductive linear bodies 21 being larger in some portions than an interval in a case where no phase is shifted. For example, when the holes H are provided in the above portions, the holes H may be larger than a case where no phase is shifted. Accordingly, a design (e.g., holes) can be determined as needed in each part of the sheet surface.
(3) According to the exemplary embodiment, the resin layer 3 has a region not covering the base material 1 in a plan view of the sheet-shaped conductive member 100. Presence of such a region can ensure air permeability of the sheet-shaped conductive member 100 even if the resin layer 3 has low air permeability.
(4) According to the exemplary embodiment, it is possible to prepare, in advance, multiple kinds of belt-shaped conductive members 10 that include the conductive linear bodies 21 with different wavelengths and amplitudes. The sheet-shaped conductive member 100 according to the exemplary embodiment can be efficiently manufactured by sequentially attaching, to the base material 1, the belt-shaped conductive members 10 that include the conductive linear bodies 21 with different wavelengths and amplitudes.

### Second Exemplary Embodiment

Subsequently, a second exemplary embodiment of the invention is explained with reference to the drawings.

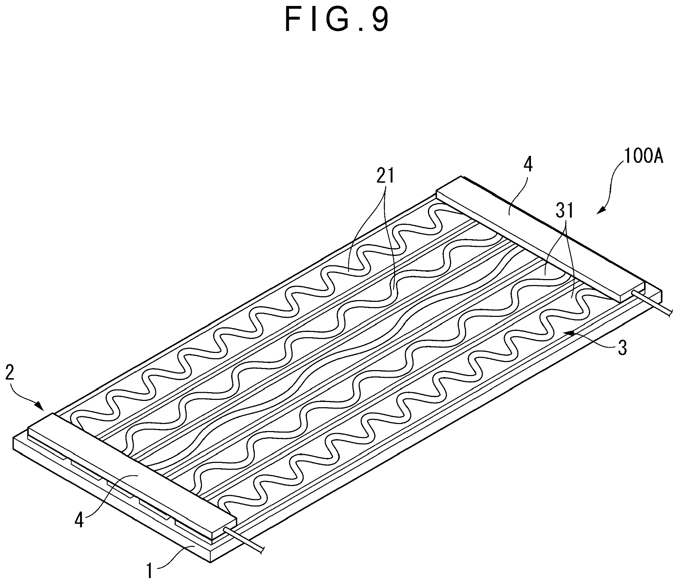

It should be noted that in the second exemplary embodiment, description will be made on an implementation in which a sheet-shaped conductive member 100A shown in Fig. 9A is used as a heat-generating body.

The sheet-shaped conductive member 100A according to the exemplary embodiment includes the pseudo sheet structure 2 with a low sheet resistance, and is suitable to be applied as the heat-generating body. That is, the heat-generating body using the sheet-shaped conductive member 100A according to the exemplary embodiment (heat-generating body according to the exemplary embodiment) can reduce a voltage applied thereto.

The second exemplary embodiment is configured the same as the first exemplary embodiment except that a plurality of electrodes 4 are attached to the pseudo sheet structure 2. The electrodes 4 are described, and the description of the rest common to the above is omitted.

The electrodes 4 are used for supplying electric current to the conductive linear bodies 21. The electrodes 4 are disposed in electrical connection on both ends of each of the conductive linear bodies 21.

The electrodes are preferably belt-shaped, since the belt-shaped electrodes can ensure a favorable contact area with even the conductive linear bodies 21 having a small diameter. A conductive foil or plate is usable as the electrodes. Each of the electrodes in a form of a conductive foil or plate preferably has a through hole. Since having the through hole, the electrodes are improved in adhesion to the resin layer 3, thereby providing a favorable connection between the conductive linear bodies 21 and the electrodes. The through hole can be formed by expanding or punching.

As the electrodes 4, specifically, a foil or plate made of a metal such as gold, silver, copper, nickel, iron, aluminum, tungsten, molybdenum, or titanium is applicable. In addition, as the electrodes, a foil or plate made of an alloy of the above metals or other metals, stainless steel containing non-metal element, carbon steel, brass, phosphor bronze, zirconium-copper alloy, beryllium copper, iron nickel, Nichrome, nickel titanium, KANTHAL^{®}, HASTELLOY^{®}, and rhenium tungsten may be applied, or a belt-shaped body containing a carbon material such as carbon nanotubes, carbon nanofibers or graphene may be applied. Alternatively, the electrodes may be laminated with a plastic film to form a laminate.

Alternatively, the electrodes 4 may be electrodes obtained by solidifying a liquid conductive material (i.e., electrodes formed of a solidified substance of a liquid conductive material) in order to ensure a favorable contact state between the conductive linear bodies 21 and the electrodes 4. The liquid conductive material is typified by a conductive paste. The conductive paste is exemplified by a paste in which metal particles or carbon particles are dispersed in a binder resin and/or an organic solvent. Examples of the metal particles include metal particles of gold, silver, copper, and nickel. Examples of the binder resin include known resins such as a polyester resin, polyurethane resin, epoxy resin, and phenol resin.

In addition to the conductive paste, solder, a conductive ink and the like may be applied as the liquid conductive material.

The conductive foil or plate and the liquid conductive material may be used in combination for the electrodes 4. The liquid conductive material may be applied to the pseudo sheet structure 2 and subsequently the conductive foil or plate may be attached thereto. Alternatively, the conductive foil or plate having a through hole may be attached to the pseudo sheet structure 2 and subsequently the liquid conductive material may be applied thereto.

The electrodes are more favorably connected by using the conductive foil or plate and the liquid conductive material in combination.

Alternatively, the conductive linear bodies 21 that are closely arranged (e.g., in a linear form or wavy form) may be used as the electrodes 4.

A ratio of resistance values between the electrodes 4 and the pseudo sheet structure 2 is preferably in a range from 0.0001 to 0.3, more preferably in a range from 0.0005 to 0.1. The ratio of the resistance values between the electrodes 4 and the pseudo sheet structure 2 can be calculated from "the resistance value of the electrodes 4 / the resistance value of the pseudo sheet structure 2." At the ratio of the resistance values falling within this range, when the sheet-shaped conductive member 100 is used as a heat-generating body, abnormal heat generation at the electrodes are inhibited. When the pseudo sheet structure 2 is used as a film heater, only the pseudo sheet structure 2 generates heat, so that a film heater having a favorable heat generation efficiency can be obtained.

The respective resistance values of the electrodes 4 and the pseudo sheet structure 2 can be measured with a tester. Firstly, the resistance value of the electrodes 4 is measured and the resistance value of the pseudo sheet structure 2 attached with the electrodes 4 is measured. Subsequently, the respective resistance values of the electrodes 4 and the pseudo sheet structure 2 are calculated by subtracting the measurement value of the electrodes 4 from the resistance value of the pseudo sheet structure 2 attached with the electrodes.

A thickness of each of the electrodes 4 is preferably in a range from 2 µm to 200 µm, more preferably in a range from 2 µm to 120 µm, particularly preferably in a range from 10 µm to 100 µm. At the thickness of each of the electrodes falling within the above range, the electric conductivity becomes high and the resistance becomes low, so that the resistance value of the electrodes against the pseudo sheet structure is kept low. Moreover, a sufficient strength is imparted to the electrodes.

### Effects of Second Exemplary Embodiment

The second exemplary embodiment can achieve effects similar to the effects (1) to (4) of the above first exemplary embodiment and the following effect (5). (5) According to the second exemplary embodiment, the electrodes 4 allow the pseudo sheet structure 2 with a low sheet resistance to conduct electricity, making it possible to generate heat. Accordingly, a heat-generating body that can reduce a voltage applied thereto can be obtained.

### Modifications of Exemplary Embodiments

The scope of the invention is not limited to the above exemplary embodiments, and modifications, improvements, etc. are included within the scope of the invention as long as they are compatible with an object of the invention.

In the above exemplary embodiments, the pseudo sheet structures 2 is a single layer, but is not limited thereto. For instance, the sheet-shaped conductive member 100 may be a sheet in which a plurality of pseudo sheet structures 2 are arranged in a sheet surface direction (direction along the sheet surface). The pseudo sheet structures 2 may be arranged with the respective conductive linear bodies 21 being in parallel with each other or intersecting each other in a plan view of the sheet-shaped conductive member 100.

Although the electrodes 4 are attached to the sheet-shaped conductive member 100A in the second exemplary embodiment, the electrodes 4 are not necessarily attached. For instance, the sheet-shaped conductive member 100A does not necessarily include the electrodes 4. The electrodes 4 may be provided in advance to an article to be installed with the sheet-shaped conductive member, and the sheet-shaped conductive member 100 may be attached to the article such that the electrodes 4 are in contact with the pseudo sheet structure 2.

### Usage of Sheet-Shaped Conductive Member

In a case where the sheet-shaped conductive member 100 is used as a heat-generating body (film heater), examples of the intended use of the heat-generating body include a defogger and a deicer. In this case, examples of the adherend include a mirror for a bathroom, etc., a window for a transportation device (a passenger vehicle, a train, a ship, an airplane, etc.), a window and wall paper for a building, an eyewear, a lighting surface of a traffic light, and a sign. In recent years, since a heater is used for controlling a temperature of a battery of an electric car, a thin heater is suitable for individually controlling a temperature of each of laminated cells. Further, the sheet-shaped conductive member of the invention also can be used as a flat cable for wiring an electric signal.

### EXPLANATION OF CODES

1...base material, 2...pseudo sheet structure, 21...conductive linear body, 3...resin layer, 31...resin tape, 4...electrode, 10...belt-shaped conductive member, 100, 100A...sheet-shaped conductive member.

## Claims

1. A sheet-shaped conductive member, comprising:
a base material;
a resin layer; and
a pseudo sheet structure in which a plurality of conductive linear bodies are arranged at an interval,
wherein each of the conductive linear bodies has a wavy shape in a plan view of the sheet-shaped conductive member, and
in a direction orthogonal to an axial direction of the conductive linear bodies, any adjacent ones of the conductive linear bodies differ from each other in at least one of a wavelength, amplitude, phase or thickness.

2. The sheet-shaped conductive member according to claim 1,
wherein the resin layer comprises a region not covering the base material in the plan view of the sheet-shaped conductive member.

3. The sheet-shaped conductive member according to claim 1 or 2,
wherein the resin layer and the pseudo sheet structure are formed by a plurality of belt-shaped conductive members, and
each of the belt-shaped conductive members comprises a belt-shaped resin tape and at least one of the wavy conductive linear bodies.

4. The sheet-shaped conductive member according to any one of claims 1 to 3,
wherein in the direction orthogonal to the axial direction of the conductive linear bodies, a wavelength of the conductive linear body arranged at an end of the sheet-shaped conductive member is smaller than a wavelength of the conductive linear body arranged at a center portion of the sheet-shaped conductive member, or
an amplitude of the conductive linear body arranged at the end is larger than an amplitude of the conductive linear body arranged at the center portion.

5. The sheet-shaped conductive member according to any one of claims 1 to 3,
wherein in the direction orthogonal to the axial direction of the conductive linear bodies, a wavelength of the conductive linear body arranged at a center portion of the sheet-shaped conductive member is smaller than a wavelength of the conductive linear body arranged at an end of the sheet-shaped conductive member, or
an amplitude of the conductive linear body arranged at the center potion is larger than an amplitude of the conductive linear body arranged at the end.

6. The sheet-shaped conductive member according to any one of claims 1 to 5,
wherein the sheet-shaped conductive member is a sheet-shaped conductive member for a heat generating body.

7. A sheet-shaped conductive member manufacturing method of manufacturing the sheet-shaped conductive member according to any one of claims 1 to 6, the method comprising:
manufacturing the sheet-shaped conductive member by attaching, onto the base material, the plurality of belt-shaped conductive members each of which comprises the belt-shaped resin tape and the at least one of the wavy conductive linear bodies.
